# EUROPÄISCHE PATENTANMELDUNG

(11) **EP 1 684 407 A1**
(43) Veröffentlichungstag der Anmeldung: **26.07.2006**
(21) Anmeldenummer: 05001276.4
(22) Anmeldetag: 21.01.2005
(51) Int. Cl.: H02P 1/28

(54) **Verfahren zur Bestimmung des Synchronisationszeitpunkts von Wechselstromstellern**

(71) Anmelder: SIEMENS AKTIENGESELLSCHAFT, 80333 München (DE)
(72) Erfinder: Runggaldier, Diethard, 96135 Stegaurach (DE); Zitzler, Stefan, 92421 Schwandorf (DE)

(57) **Zusammenfassung**

Die Erfindung betrifft ein Verfahren zur Bestimmung eines Synchronisationszeitpunkts von Wechselstromstellern an oberwellenbehafteten Netzwechselspannungen, wobei die Bestimmung des Synchronisationszeitpunkts durch Flankenauswertung eines digitalisierten Netzspannungssignals innerhalb einer mit einem ersten Flankenwechsel zum Zeitpunkt t₁ startenden Überwachungszeit T_{Ü} erfolgt, wobei sich der erste Synchronisationszeitpunkt t_{S1} zunächst aus dem ersten Flankenwechsel zum Zeitpunkt t₁ ergibt und sich ein jeweils weiterer Synchronisationszeitpunkt t_{Sn} mit n>1 iterativ aus dem Mittelwert der Zeitspanne zwischen dem Synchronisationszeitpunkt t_{S(n-1)} und dem Zeitpunkt des nächsten zum Flankenwechsel t ₍ₙ₋₁₎ gleichsinnigen und innerhalb der Überwachungszeit T_{Ü} stattfindenden Flankenwechsels tₙ berechnet, wobei der letzte berechnete Synchronisationszeitpunkt dem verfahrensmäßigen Synchronisationszeitpunkt t_{S} entspricht.

## Beschreibung

Verfahren zur Bestimmung des Synchronisationszeitpunkts von Wechselstromstellern.

Die Erfindung betrifft ein Verfahren zur Bestimmung des Synchronisationszeitpunkts durch Auswertung von Nulldurchgängen einer oberwellenbehafteten Netzwechselspannung zur Synchronisation von Wechselstromstellern, insbesondere Drehstromstellern mit mit dem Wechsel- oder Drehstromnetz.

Wechselstromsteller sind Wechselstromumrichter, die bei einer fest vorgegebenen Eingangsspannung steuerungsabhängig eine variable Ausgangsspannung erzeugen. Diese Ausgangsspannung kann maximal gleich der Eingangsspannung sein. Bei Anschnittsteuerung ist die Ausgangsfrequenz gleich der Eingangsfrequenz. Der Stromrichtersatz besteht aus Halbleiterventilen (Thyristoren), die antiparallel in eine Wechselstromzuleitung geschaltet sind. Werden beide Thyristoren periodisch in jeder Halbschwingung mit dem Steuerwinkel α gezündet, so kann bei ohmscher Last die Ausgangsspannung vom vollen Wert bei *α*=0° bis zum Wert Null bei α=180° stetig verstellt werden. Da bei einer rein induktiven Belastung der Strom der Spannung um 90° nacheilt, wird hier die gleich Spannungsverstellung durch eine Änderung des Steuerwinkels von 90° bis 180° erzielt.

Bei einem dreiphasigen Wechselstromsteller, auch Drehstromsteller genannt, werden drei antiparallele Thyristorpaare in den Drehstromzuleitungen eines Verbrauchers angeordnet. Durch Anschnittsteuerung der positiven und ggf. zusätzlich der negativen Halbschwingung jeder Phase kann die Leistung eines Drehstromverbrauchers stufenlos gesteuert werden. Durch die stufenlose Dosierung der zugeführten elektrischen Leistung kann bei Asynchronmaschinen eine Reduzierung von Anlaufströmen und Anlaufmomenten erreicht werden. In der Antriebstechnik werden Drehstromsteller zur Drehzahlsteuerung von Asynchronmaschinen, insbesondere für Antriebe mit quadratischer Drehzahl-Drehmomenten-Kennlinie wie beispielsweise Ventilatorantriebe oder Kreiselpumpen verwendet.

Üblicherweise erfolgt bei Normalbetrieb die Zündung der Thyristoren stromgesteuert, d.h. nach dem Erlöschen des Stromes wird eine Zeit, die dem Zündwinkel *α* entspricht abgewartet, bevor die Thyristoren wieder gezündet werden. Bei mehreren Verfahren ist aber zusätzlich eine Synchronisation auf die Netzspannung notwendig. So muss beispielsweise zur Erreichung eines Sanftanlaufs die erste Zündung des Drehstromstellers bei Motorstart spannungssynchronisiert d.h. phasenbezogen zur Spannung erfolgen. Ferner sind sogenannte cos ψ basierte Regelverfahren bekannt, die zur Regelung den Phasenwinkel ψ, also die Verschiebung zwischen Strom und Spannung verwenden. Solche cos ψ basierte Regelverfahren sind beispielsweise energiesparende Verfahren, die eine Spannungsabsenkung durchführen, wenn kein volles Drehmoment vom Antrieb verlangt wird. Wie in der Patentschrift DE 4005679 C2 offenbart, ist auch eine Synchronisierung auf die Netzspannung notwendig, wenn beispielsweise ein noch drehender, magnetisierter Motor wieder eingeschaltet werden soll und die Netzbelastung dabei gering zu halten ist.

Allen vorgenannten und aus dem Stand der Technik bekannten Verfahren ist gemeinsam, dass eine Synchronisierung auf die Netzspannung über die Erkennung und Erfassung der Nulldurchgänge der Spannung gewährleistet wird. Eine falsche Bestimmung des Nulldurchgangssignals kann dabei zu einem Fehlverhalten des angeschlossenen Motors, insbesondere beim Start des Motors führen. Der Zeitpunkt eines Nulldurchgangs, der Netzspannung auf den zeitversetzt die Zündung von Halbleiterventilen erfolgt, soll im Folgenden als Synchronisationszeitpunkt verstanden werden.

Ein einfaches und kostengünstiges Verfahren zur Bestimmung des Nulldurchgangs der Netzspannung, wie es aus dem Stand der Technik hinreichend bekannt ist, bedient sich der Auswertung des digitalisierten Netzspannungssignals. Dieses digitalisierte Signal kann über eine einfache Widerstandskombination ermittelt und einem Prozessor zu Auswertezwecken zugeführt werden. Das digitalisierte Signal wird an den Nulldurchgängen der Netzspannung Flankenwechsel aufweisen, diese Flankenwechsel sind in einer nachgelagerten Auswerteeinrichtung weiterzuverarbeiten.

Je nach Aussteuerungsgrad eines Wechselstromstellers treten jedoch z. T. erhebliche Oberwellenschwingungsströme in der Last und damit auch im Wechsel- bzw. Drehstromnetz, auf. Ferner wird das Netz durch die Rückwirkungen anderer Verbraucher mit Oberschwingungen belastet. Diese Oberschwingungen verursachen durch die Überlagerung mit der Grundschwingung, insbesondere in der zeitlichen Nähe des Nulldurchgangs der Grundschwingung mehrere Nulldurchgänge dieser oberwellenbehafteten Netzspannung und erschweren auf diese Weise eine genaue Synchronisation auf die Grundschwingung. Mit der Vielzahl von Nulldurchgängen der oberwellenbehafteten Netzspannung wird auch das erzeugte digitalisierte Signal in der zeitlichen Nähe des Nulldurchgangs der Grundschwingung mehrere Flankenwechsel aufweisen.

Darüber hinaus wird es durch die Überlagerung mit den Harmonischen auch zu einer Verschiebung zwischen dem Nulldurchgang der Grundschwingung und dem Flankenwechsel des digitalisierten Signals auf der Zeitachse kommen. Damit kann das digitalisierte Signal ohnehin nur in Nährung dazu verwendet werden den Nulldurchgang der Grundschwingung zu bestimmen.

Ferner kommt in der Auswertung des digitalisierten Signals erschwerend hinzu, dass die Graphen von Grundschwingung und digitalisiertem Signal nicht das gleiche Anstiegsvorzeichen haben müssen. So können beispielsweise einem positiven Anstieg des Graphen der Grundschwingung durchaus auch fallende Flanken im digitalisierten Signal gegenüberstehen.

Aus dem Stand der Technik sind verschiedene Nährungsverfahren für eine Bestimmung des Synchronisationszeitpunkt auf Basis der Bestimmung der Nulldurchgänge des digitalisierten Netzspannungssignals bekannt, wobei die Genauigkeit dieser Verfahren auch wegen der oftmals eingeschränkten Rechenleistung nicht sehr hoch ist und damit das in vielen Applikationen gewünschte sanfte Anlaufverhalten von Motoren beeinträchtigt wird.

So wurde beispielsweise in einem früheren Verfahren der Anmelderin das digitalisierte Spannungssignal auf eine fallende Flanke hin überwacht und zum Zeitpunkt des Flankenwechsels eine Überwachungszeit gestartet. Ereignete sich während dieser Überwachungszeit eine oder mehrere weitere Flankenwechsel aufgrund fallender Flanken, so wurde der Zeitpunkt der früheren fallenden Flanke als Synchronisationszeitpunkt verworfen. Dieses Verfahren hatte also nur die letzte fallende Flanke innerhalb der Überwachungszeit berücksichtigt. Eine Gewichtung der einzelnen Nulldurchgänge fand nicht statt.

Aufgabe der vorliegenden Erfindung ist es daher ein Verfahren anzugeben, welches in stark mit Oberwellen behafteten Netzen die Genauigkeit der Spannungssynchronisation eines Wechselstromstellers wesentlich verbessert, um das Start- und Laufverhalten eines angeschlossenen Motors günstig zu beeinflussen und Fehlverhalten des angeschlossenen Motors auszuschließen.

Die Aufgabe wird gelöst durch ein Verfahren zur Bestimmung eines Synchronisationszeitpunkts von Wechselstromstellern an oberwellenbehafteten Netzwechselspannungen, bei dem man
1) das Netzspannungssignal digitalisiert und auf Flankenwechsel überwacht;
2) dem ersten Flankenwechsel F₁ den Zeitpunkt t_{F1} zuordnet;
3) zum Zeitpunkt t_{F1} eine Überwachungszeit T_{ü} startet;
4) eine Überwachung auf Flankenwechsel nur innerhalb der Überwachungszeit T_{ü} zulässt, wobei das Verfahren dadurch gekennzeichnet ist, dass
5) sich der erste Synchronisationszeitpunkt t_{S1} aus dem Zeitpunkt t_{F1} ergibt;
6) sich weitere Synchronisationszeitpunkte tₛₙ mit n=2,3,4 ... iterativ berechnen, wobei
   6.1) einem nächsten, jedoch zum Flankenwechsel F₁ gleichsinnigen Flankenwechsel Fₙ der Zeitpunkt t_{Fn} zugeordnet wird;
   6.2) sich der nächste Synchronisationszeitpunkt tₛₙ aus dem Mittelwert der Zeitspanne zwischen den Zeitpunkten t_{S(n-1)} und t_{Fn} ergibt;
7) der letzte sich ergebene Synchronisationszeitpunkt dem verfahrensmäßigen Synchronisationszeitpunkt entspricht.

Unter einer gleichsinnigen Flanke wird dabei ein Flankenwechsel mit gleichem Vorzeichen verstanden. Die zu einer fallenden Flanke gleichsinnige Flanke ist eine andere fallende Flanke, die zu einer steigenden Flanke Gleichsinnige ist eine weitere Steigende.

Wie bereits erwähnt wird es bei stark oberwellenbehafteten Netzwechselspannungen i. d. R. zu mehreren Nulldurchgängen der Netzwechselspannung kommen und damit auch zu mehreren Flankenwechseln des digitalisierten Netzspannungssignals. Durch das o. g. Iterationsverfahren erfolgt eine Gewichtung in Dauer und Betrag jeder einzelnen, durch die Harmonischen verursachten Nulldurchgangsschwingung und damit auch zu einer Erhöhung der Genauigkeit in Richtung der Erkennung des Nulldurchgangs der Grundschwingung.

In einer bevorzugten Ausführungsform wird mit der Festlegung des verfahrensmäßigen Synchronisationszeitpunkts eine Verhinderungszeit Tᵥ gestartet. Die Verhinderungszeit Tᵥ unterdrückt vor deren Ablauf ein erneutes Starten des Berechnungsalgorithmus zur Festlegung eines Synchronisationszeitpunkts. Vorteilhaft kann diese Verhinderungszeit dazu genutzt werden, den Berechnungsalgorithmus auf Vielfache der Netzperiode einzustellen. Ferner können für die Berechnung ungewünschte Nulldurchgänge, wie sie beispielsweise nach Ablauf einer halben Netzperiode wieder auftreten, ausgeblendet werden.

In einer weiteren Ausführungsform ist die Verhinderungszeit Tᵥ parametrierbar. Damit besteht die Möglichkeit den Wert der Verhinderungszeit auf die speziellen Anforderungen anzupassen, wie sie sich beispielsweise aus der Netzfrequenz ergeben, an der der Wechselstromsteller betrieben wird.

In einer bevorzugten Ausführungsform ist der Wert der Verhinderungszeiten zwischen 70% und 80% der Netzperiode eingestellt, wobei ein Standardwert von 75% der Netzperiode vorgeschlagen wird. Dieser Wert sichert in Zusammenhang mit der Überwachungszeit die Berechnung eines verfahrensmäßigen Synchronisationszeitpunkts pro Periode. Somit kann vorteilhaft sichergestellt werden, dass eine Berechung eines verfahrensmäßigen Synchronisationszeitpunkts immer auf den fallenden oder steigenden Abschnitt der Spannungsgrundschwingung erfolgt. Dies kann in Zusammenhang mit den real existierenden, unterschiedlichen Verzerrungen für steigende und fallende Abschnitte vorteilhaft genutzt werden.

In einer weiteren Ausführungsform ist auch die Überwachungszeit T_{ü} parametrierbar. Damit besteht die Möglichkeit den Wert der Überwachungszeit auf die speziellen Anforderungen anzupassen, wie sie sich beispielsweise aus der Netzfrequenz ergeben, an der der Wechselstromsteller betrieben wird. Ferner kann es vorteilhaft sein, die Überwachungszeit dem Verzerrungsgrad der Spannung anzupassen. So kann es beispielsweise erforderlich sein, die Überwachungszeit zu verlängern, wenn der Verzerrungsgrad sehr hoch ist und im zeitlichen Vergleich zum Nulldurchgang der Spannungsgrundschwingung frühe Nulldurchgänge des oberwellenbehafteten Signals stattfinden.

Bei einer weiteren Variante kann die Überwachungszeit T_{ü} zwischen 20% und 30% der Netzperiode liegen, wobei als Standardeinstellung ein Wert von 25% der Netzperiode vorgeschlagen wird. Über diese Werte wird der Bereich der erwarteten Nulldurchgänge erfahrungsgemäß gut abgebildet.

Die Aufgabe wird ferner gelöst durch einen Wechselstromsteller, insbesondere Drehstromsteller, welcher nach einem der o.g. Synchronisationsverfahren arbeitet. Hinsichtlich seiner Vorteile wird auf die vorgenannten Ausführungen verwiesen.

Nachfolgend werden Ausführungsbeispiele der Erfindung anhand von Zeichnungen näher erläutert. Darin zeigen:
- FIG 1: die beispielhafte Darstellung des Spannungsverlaufes in einem oberwellenbehafteten Drehstromnetzes im Amplituden-Zeit-Diagramm für zwei Perioden
- FIG 2: die beispielhafte, qualitative Darstellung des Verlaufes ausgewählter Spannungen im Spannungs-Zeit-Diagramm
- FIG 3: beispielhaft ein Ablaufdiagram zum Anspruch 1

Einander entsprechende Teile sind in allen Figuren mit denselben Bezugszeichen versehen.

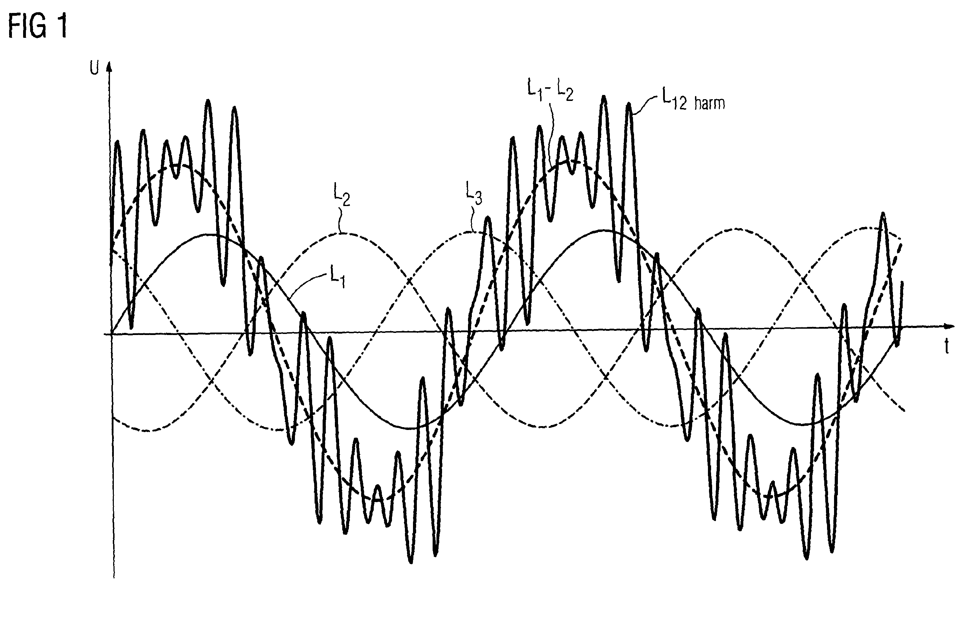

Fig. 1 zeigt beispielhaft verschiedene Spannungsverläufe eines mit Oberwellen behafteten Drehstromnetzes. Dabei stellen L₁, L₂ und L₃ den stetigen Graphen der sinusförmigen Grundschwingung der Strangspannung dar. Die einzelnen Grundschwingungen sind um 120° voneinander zeitversetzt. Die die Oberwelligkeit kennzeichnenden, sich aus der Addition der Grundschwingung und der einzelnen Harmonischen unterschiedlicher Ordnungszahlen ergebenen, resultierenden Spannungsverläufe von L_{1_harm}, L_{2_harm} und L_{3_harm} sind der Übersichtlichkeit halber in Fig. 1 nicht dargestellt. Dieser resultierende Spannungsverlauf folgt jedoch tendenziell dem Verlauf der Grundschwingung, da der Einfluss der Harmonischen mit steigender Ordnungszahl abnimmt. In Fig. 1 ist weiterhin die Leiterspannung L₁-L₂ in ihrer Grundschwingung abgebildet, die sich aus der Addition der Grundschwingungen der Strangspannungen L₁, L₂ ergeben, wohingegen die dargestellte Spannung L_{12_harm} aus der Addition der Grundschwingungen L₁, L₂ und der hier nicht dargestellten Oberwellen L_{1_harm}, L_{2_harm} hervorgeht. Der Spannungsverlauf ist über zwei Perioden dargestellt.

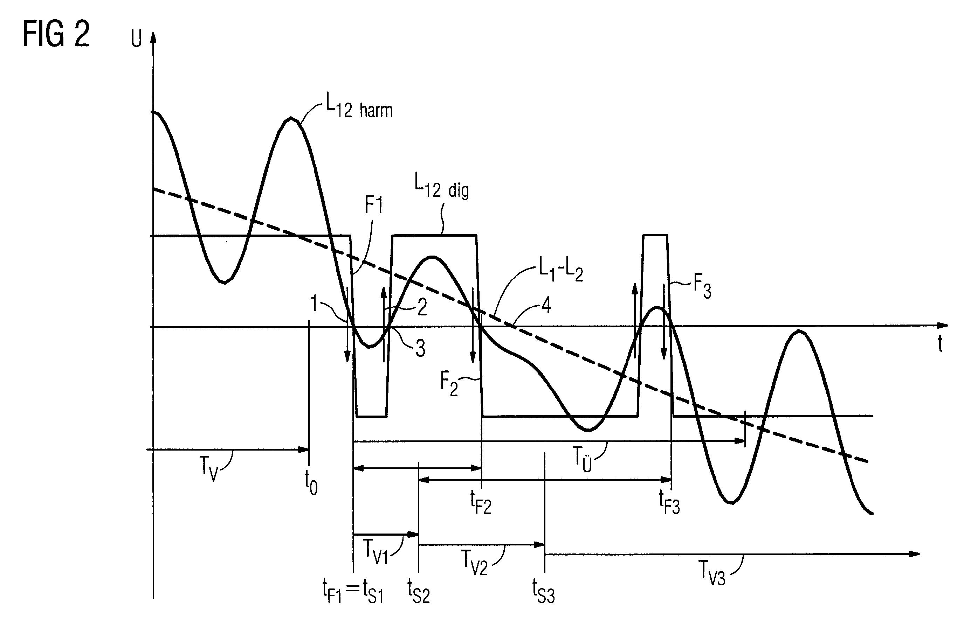

Fig. 2 zeigt den Ausschnitt aus Fig. 1 zwischen 90° und 210°. Der Übersichtlichkeit halber wurden in Fig. 2 nur die im Folgenden interessierenden Spannungsverläufe der Leiterspannung L₁-L₂ und L_{12_harm} übernommen, da im gezeigten Ausführungsbeispiel eine Synchronisation an L₁-L₂ erfolgen soll. Der Graph der Spannungsfunktion L₁-L₂ ist im gesamten dargestellten Abschnitt monoton fallend. Zusätzlich zeigt Fig. 2 das digitalisierte Signal L_{12_dig} der oberwellenbehafteten Leiterspannung L_{12_harm}.

Das digitalisierte Signal L_{12_dig} kennt nur die Zustände 1 und -1 und erfährt immer dann eine Umkehr seiner Polarität, wenn sich das Vorzeichen des Wertes des oberwellenbehafteten Spannungssignals L_{12_härm} ändert. Ein Wechsel des Wertes des digitalisierten Signals L_{12_dig} von +1 auf -1 wird als fallende Flanke, der Wechsel des Wertes von -1 auf +1 als steigende Flanke bezeichnet. Die fallende Flanke ist durch den Richtungspfeil 1, die steigende Flanke durch den Richtungspfeil 2 dargestellt. Der Flankenwechsel 1,2 des digitalisierten Signals L_{12_dig} erfolgt an den Nullstellen 3 des oberwellenbehafteten Spannungssignals L_{12_harm}. Solche Nullstellen 3 treten gehäuft in zeitlicher Nähe des Nulldurchgangs 4 des Grundschwingungssignals auf, da das Grundschwingungssignal in diesem Bereich die geringste Amplitude aufweist und der Einfluss der Harmonischen auf das Vorzeichen des Spannungssignals aus diesem Grunde vergleichsweise stark ist.

Obwohl im Folgenden die Bestimmung des Synchronisationszeitpunktes im fallenden Abschnitt der Spannungsgrundschwingung angewandt und beschrieben wird, ist eine Anwendung des Verfahrens im Bereich der steigenden Spannungsgrundschwingung genauso möglich. Für das Erkennen einer fallenden oder steigenden Grundschwingung der Spannung kennt der Fachmann mehrere Verfahren, auf die im Einzelnen hier nicht eingegangen werden soll. Nach Erkennung der fallenden Spannungsgrundschwingung bzw. nach Ablauf der Verhinderungszeit Tᵥ zum Zeitpunkt t₀ (auf diese wird später eingegangen) erfolgt die Überwachung des digitalisierten Signals L_{12_dig}. Wird die erste fallende Flanke F₁ des digitalisierten Signals L_{12_dig} zum Zeitpunkt t_{F1} erkannt, so wird in einem ersten, die Erfindung kennzeichnenden Verfahrensschritt dem Synchronisationszeitpunkt t_{S1} der Zeitpunkt t_{F1} zugewiesen. Zeitgleich wird eine Überwachungszeit T_{Ü} gestartet, welche die Länge der Überwachung auf Flankenwechsel des digitalisierten Signals L_{12_dig} bestimmt. Mit Erkennen einer weiteren fallenden Flanke F₂ im digitalisierten Signal innerhalb der Überwachungszeit T_{Ü} zum Zeitpunkt t_{F2} wird der neue Synchronisationszeitpunkt t_{S2} als Mittelwert der Zeitspanne zwischen dem vorhergehenden Synchronisationszeitpunkt t_{S1} und des Zeitpunkts der bis dato letzten fallenden Flanke zum Zeitpunkt t_{F2} berechnet. Diese Iterationsschritte wiederholen sich innerhalb der Überwachungszeit T_{Ü}, solange weitere zum ersten Flankenwechsel gleichsinnige - hier fallende - Flankenwechsel festgestellt werden. D.h. mit fallender Flanke F₃ des digitalisierten Signals L_{12_dig} zum Zeitpunkt t_{F3} ergibt sich somit der neue gültige Synchronisationszeitpunkt t_{S3} wiederum aus dem Mittelwert der Zeitspanne zwischen dem vorhergehenden Synchronisationszeitpunkts t_{S2} und dem Zeitpunkt der letzen Flanke t_{F3}. In Fig. 2 erfolgen innerhalb der Überwachungszeit T_{Ü} keine weiteren Flankenwechsel des digitalisierten Signals L_{12_dig}, somit ist der letzte Synchronisationszeitpunkt t_{S3} der verfahrensmäßige Synchronisationszeitpunkt. Mit Festlegung eines Synchronisationszeitpunktes tₛₙ wird jeweils eine Verhinderungszeit Tᵥₙ gestartet, die jedoch mit Berechnung eines neuen Synchronisationszeitpunktes verworfen werden kann, so dass immer nur eine Verhinderungszeit, gestartet mit dem letzten verfahrensmäßigen Synchronisationszeitpunkt existiert. Die Verhinderungszeit, die zum verfahrensmäßigen Synchronisationszeitpunkt gestartet wurden, ist die verfahrensmäßige Verhinderungszeit. Fig. 2 zeigt den Start der Verhinderungszeiten T_{V1} zum Zeitpunkt t_{S1}. Diese wird zum Zeitpunkt tₛ₂ mit dem Start von T_{V2} verworfen. T_{V2} wird wiederum mit dem Start von T_{V3} zum Zeitpunkt t_{S3} verworfen. Die Verhinderungszeit T_{V3} ist die verfahrensmäßige Verhinderungszeit und unterdrückt die Auswertung von Flankenwechseln des digitalisierten Signals vor deren Ablauf und ermöglicht so beispielsweise eine Taktung des Verfahrens auf Vielfache der Netzperiode. Mit der hier vorgeschlagenen Parametrierung der Verhinderungszeit auf von ca. 75% der Netzperiode, wird beispielsweise eine Taktung des Verfahrens auf eine volle Netzperiode sichergestellt.

In Fig. 2 ist die Verhinderungszeit, die mit dem verfahrensmäßigen Synchronisationszeitpunkt des vorhergehenden Berechnungszyklus gestartet wurde zum Zeitpunkt t₀ abgelaufen. Die Überwachung auf Änderungen des Flankenwechsels des digitalisierten Signals beginnt ab diesem Zeitpunkt erneut.

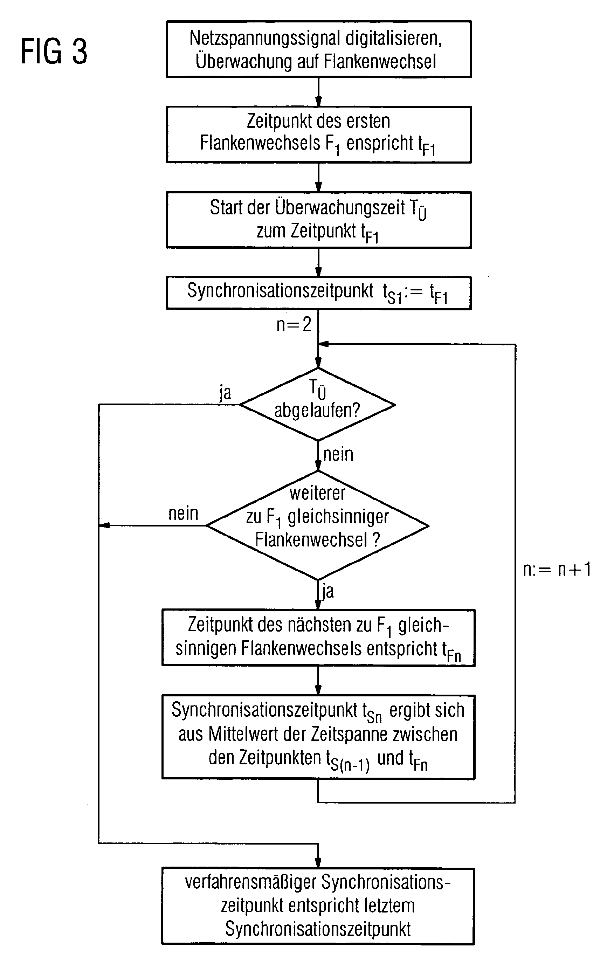

Fig.3 zeigt beispielhaft und der besseren Übersichtlichkeit wegen die im Anspruch 1 beanspruchten Verfahrensschritte in Form eines Ablaufdiagramms. Dabei soll Fig. 3 insbesondere das Iterationsverfahren als solches mit seiner Rückkopplung darstellen, nicht aber die konkrete programmtechnische Ausgestaltung.

## Patentansprüche

1. Verfahren zur Bestimmung eines Synchronisationszeitpunktes von Wechselstromstellern an oberwellenbehafteten Netzwechselspannungen, bei dem man
1) das Netzspannungssignal digitalisiert und auf Flankenwechsel überwacht;
2) dem ersten Flankenwechsel F₁ den Zeitpunkt t_{F1} zuordnet;
3) zum Zeitpunkt t_{F1} eine Überwachungszeit T_{Ü} startet;
4) eine Überwachung auf Flankenwechsel nur innerhalb der Überwachungszeit T_{Ü} zulässt **dadurch** g e k e n n - z e i c h n e t, dass
5) sich der erste gültige Synchronisationszeitpunkt t_{S1} aus dem Zeitpunkt t_{F1} ergibt;
6) sich weitere gültige Synchronisationszeitpunkte tₛₙ mit n=2,3,4 ... iterativ berechnen, wobei
6.1) einem nächsten, jedoch zum Flankenwechsel F₁ gleichsinnigen Flankenwechsel Fₙ der Zeitpunkt t_{Fn} zugeordnet wird;
6.2) sich der nächste gültige Synchronisationszeitpunkt tₛₙ aus dem Mittelwert der Zeitspanne zwischen den Zeitpunkten t_{S(n-1)} und t_{Fn} berechnet;
7) der letzte berechnete gültige Synchronisationszeitpunkt dem verfahrensmäßigen Synchronisationszeitpunkt entspricht.

2. Verfahren nach Anspruch 1, **dadurch** g e k e n n - z e i c h n e t , dass zum verfahrensmäßigen Synchronisationszeitpunkt eine Verhinderungszeit Tᵥ startet, die eine erneute Synchronisation vor deren Ablauf verhindert.

3. Verfahren nach Anspruch 2, **dadurch** g e k e n n - z e i c h n e t , dass die Verhinderungszeit T_{V} parametrierbar ist.

4. Verfahren nach Anspruch 3, **dadurch** g e k e n n - z e i c h n e t , dass die Verhinderungszeit Tᵥ zwischen 70% und 80% der Netzperiode liegt.

5. Verfahren nach einem der vorhergehenden Ansprüche, d a - d u r c h **gekennzeichnet**, dass die Überwachungszeit T_{ü} parametrierbar ist.

6. Verfahren nach Anspruch 5 **dadurch** g e k e n n - z e i c h n e t , dass die Überwachungszeit T_{Ü} zwischen 20% und 30% der Netzperiode liegt.

7. Wechselstromsteller, insbesondere Drehstromsteller, mit einem Synchronisationsverfahren nach einem der vorhergehenden Ansprüche.
